# FASCICULE DE BREVET EUROPEEN

(11) **EP 0 960 217 B1**
(45) Date de publication et mention de la délivrance du brevet: **02.10.2002**
(21) Numéro de dépôt: 98956951.2
(22) Date de dépôt: 26.11.1998
(51) Int. Cl.: C22C 32/00, C03B 37/095

(54) **ALLIAGE RESISTANT A LA CORROSION, PROCEDE D'ELABORATION ET ARTICLE REALISE A PARTIR DE L'ALLIAGE**
KORROSIONSBESTÄNDIGE LEGIERUNG, HERSTELLUNGSVERFAHREN UND GEGENSTÄNDE AUS DIESER LEGIERUNG
CORROSION RESISTANT ALLOY, PREPARATION METHOD AND ARTICLE MADE FROM SAID ALLOY

(30) Priorité: 28.11.1997 FR 9715022
(43) Date de publication de la demande: 01.12.1999
(73) Titulaire: SAINT-GOBAIN RECHERCHE, 93305 Aubervilliers (FR)
(72) Inventeur: BERNARD, Jean-Luc, F-60600 Giencourt Breuil le Vert (FR); BOUSQUET, Michel, F-71100 Chalon sur Saône (FR); KESSLER, Olivier, F-54000 Nancy (FR); STEINMETZ, Pierre, F-54500 Vandoeuvre (FR)
(74) Mandataire: Cardin, Elise
(86) Numéro de dépôt international: FR9802532
(87) Numéro de publication internationale: WO99028517

(56) Documents cités:
- EP-A- 0 065 812
- WO-A-88/05830
- FR-A- 2 573 094
- US-A- 3 087 234
- US-A- 3 152 886
- US-A- 4 877 435

## Description

La présente invention concerne un alliage résistant à l'oxydation et/ou à la corrosion, en particulier à haute température. Plus particulièrement, l'invention concerne un alliage résistant à l'oxydation en milieu corrosif tel que le verre fondu ou autre matériau similaire, pouvant être utilisé pour la réalisation d'articles amenés au contact du verre fondu ou dudit matériau lors de son élaboration ou de sa transformation à chaud.

Dans l'industrie verrière, les éléments ou outils en contact avec le verre fondu sont constitués de matériaux réfractaires, notamment céramiques. Pour certaines opérations, on préfère utiliser des outils métalliques, généralement faits d'alliage, en particulier lorsque l'outil doit avoir des propriétés de conduction électrique ou encore lorsque l'outil doit avoir une certaine ductilité et résistance mécanique à la température de traitement du verre en fusion.

C'est le cas notamment pour la fabrication de laine de verre par la technique dite à centrifugation interne, tout particulièrement pour ce qui concerne la phase terminale du procédé où, à la sortie du four de fusion, le verre est coulé en continu dans un ensemble de pièces de révolution tournant à très grande vitesse de rotation autour de leur axe vertical. Arrêté dans sa chute initiale par le fond d'une pièce interne dite «panier», le verre se répand sous l'effet de la force centrifuge contre la paroi cylindrique percée de trous de cette même pièce. Ces trous laissent passer le verre qui, toujours sous l'effet de la force centrifuge, va se plaquer contre la paroi dite « bande » d'une pièce externe dite « assiette» qui est également percée de trous, ceux-ci étant plus petits que les précédents. Toujours sous l'effet de la force centrifuge, le verre traverse la bande de l'assiette de toutes parts sous la forme de filaments de verre fondu. Un brûleur annulaire situé au-dessus de l'extérieur de l'assiette, produisant un courant de gaz descendant longeant la paroi extérieure de la bande, dévie ces filaments vers le bas en les étirant. Ceux-ci se « solidifient » ensuite sous la forme de laine de verre.

Les pièces appelées « panier » et « assiette » sont des outils de fibrage très sollicités thermiquement (chocs thermiques lors des démarrages et arrêts), mécaniquement (force centrifuge, érosion due au passage du verre) et chimiquement (oxydation et corrosion par le verre fondu, et par les gaz chauds sortant du brûleur pour l'assiette). A titre indicatif la température opérationnelle est de l'ordre d'au moins 1000°C, pour que le verre présente une viscosité convenable.

La durée de vie de ces organes dépend largement de la résistance à la corrosion du matériau qui les constitue.

A cet égard, on utilise en général un alliage à base de nickel renfermant environ 30 % de chrome et renforcé par précipitation de carbures, comme décrit notamment dans FR-A-2 536 385.

La résistance à l'oxydation et à la corrosion à la température d'utilisation de cet alliage est assurée par sa haute teneur en chrome qui forme une couche protectrice de Cr₂O₃ à la surface de la pièce en contact avec le milieu oxydant. Une diffusion permanente du chrome vers le front de corrosion permet de maintenir une réserve de chrome à l'arrière de la couche d'oxydes Cr₂O₃.

Les températures de fonctionnement auxquelles cet alliage peut être utilisé avec succès sont cependant limitées à une valeur maximale de l'ordre de 1050 à 1100°C. Au-delà de cette température, le matériau se dégrade rapidement par corrosion ainsi que par fluage.

Ce matériau n'est donc pas apte à répondre à la demande de techniques de production de laine à partir de verres plus visqueux que les verres usuels de type borosilicate et dont la mise en oeuvre nécessite des températures supérieures à 1100°C.

Notamment pour répondre à ce besoin, l'invention s'est fixé pour but de fournir un alliage ayant une résistance améliorée à la corrosion et plus particulièrement à l'oxydation à haute température, en particulier jusqu'à des températures de l'ordre de 1300°C.

Certains alliages à base de métaux plus réfractaires que le nickel sont connus pour avoir une bonne résistance à la corrosion par le verre à température élevée. On peut citer en particulier un alliage à base de cobalt selon FR-A-2 273 075.

D'autres alliages spéciaux, tels que les alliages renforcés par dispersion d'oxydes (ODS), superalliages en général à base de nickel et/ou de fer renfermant en dispersion au sein de leur matrice de fines particules d'oxydes, généralement d'oxyde d'yttrium, ont également été employés pour fabriquer des assiettes de fibrage présentant de bonnes propriétés mécaniques à température élevée. Un alliage de ce type est décrit notamment dans US-A-5 328 499.

Cependant, avec les alliages connus, il est difficile d'atteindre des températures supérieures à 1200-1250°C, en ayant une tenue à l'oxydation compatible avec les impératifs de production industrielle.

Alternativement, il est connu d'utiliser des métaux très réfractaires, tels le molybdène ou le tungstène, qui sont doués de résistance élevée à la corrosion par le verre à haute température lorsqu'ils sont totalement immergés dans le verre. Le problème commun à ces métaux réfractaires reste toutefois leur sensibilité aux atmosphères contenant de l'oxygène. Leur réactivité est en effet très importante et conduit à la formation d'oxydes ou bien peu protecteurs, comme dans le cas du tantale ou du niobium, ou bien très volatils comme pour le molybdène ou le tungstène, responsables d'une dégradation rapide par corrosion à haute température.

WO-A- 88/05830 décrit des alliages réfractaires résistant au fluage contenant une ou des phases dispersées d'oxyde, nitrure, borure, carbure, silicate ou aluminate. L'oxyde peut être choisi parmi plusieurs oxydes métalliques dont l'oxyde de chrome.

Un autre but de l'invention est d'améliorer la tenue à l'oxydation et/ou à la corrosion à haute température d'un métal ou alliage de métaux.

Ces buts ont été atteints dans la présente invention en créant dans la matrice du matériau une phase dispersée de particules d'oxyde de chrome Cr₂O₃ Il a été observé que la présence de Cr₂O₃ à l'intérieur même du matériau favorise la formation et surtout l'entretien d'une couche de Cr₂O₃ protectrice à la surface du matériau. La phase dispersée d'oxyde de chrome Cr₂O₃ peut soit résulter d'une mise en dispersion de Cr₂O₃ introduit sous cette forme dans le matériau, soit d'une réaction *in situ* à partir d'un précurseur approprié dispersé dans la matrice et capable de réagir dans et éventuellement avec la matrice pour former du Cr₂O₃ interne

A cet égard, l'invention a pour objet un alliage réfractaire comprenant du chrome métal, du type Cr₂O₃-formeur, résistant à l'oxydation et/ou à la corrosion notamment par le verre, en particulier à haute température, caractérisé en ce qu'il renferme e dispersion au sein de sa matrice de l'oxyde de chrome Cr₂O₃ et/ou au moins u précurseur de cet oxyde, ledit précurseur étant capable de réagir dans le milie de ladite matrice pour former de l'oxyde de chrome Cr₂O₃ en cas d'oxydation.

Dans la présente description, on entend par alliage, de la façon usuelle, un produit métallique obtenu en incorporant à un métal un ou plusieurs autre éléments. Appliquée à l'invention, cette définition englobe aussi bien des matériaux dont la matrice est constituée de la combinaison de chrome allié à au moins un autre métal, que des matériaux dont la matrice est constituée de chrome pur, le constituant d'alliage étant dans ce dernier cas l'oxyde de chrome Cr₂O₃ et/ou son précurseur particulaire.

Par Cr₂O₃-formeur on entend un alliage capable, en présence d'un milieu oxydant ou corrosif, tel que l'oxygène de l'air ou le verre fondu, de former à sa surface une couche de Cr₂O₃ protectrice.

Selon l'invention, cette capacité est améliorée par la présence de particules de Cr₂O₃ et/ou d'au moins un précurseur de Cr₂O₃ en dispersion interne.

Par précurseur d'oxyde Cr₂O₃, on entend tout composé capable de réagir dans le milieu de la matrice pour former de l'oxyde de chrome Cr₂O₃, le cas échéant au moyen d'un traitement notamment thermique approprié. Avantageusement au moins un tel précurseur est un composé oxygéné d'un métal réductible par les atomes de chrome avoisinants au sein de la matrice. Des composés oxygénés appropriés sont des oxydes de métaux plus oxydants que le chrome, tels que notamment le fer, le nickel, le cobalt, par exemple Fe₂O₃, FeO, NiO, CoO. En tant que précurseur de Cr₂O₃ selon l'invention, on peut également citer des oxydes mixtes de chrome et d'un autre métal, tels que notamment des chromites de fer, de nickel ou de cobalt.

En fonction de la cinétique de la réaction dudit composé précurseur, l'alliage pourra renfermer en tant que dispersoïde, pendant des périodes de plus ou moins longue durée, soit essentiellement le précurseur, soit à la fois la Cr₂O₃ et son précurseur, soit essentiellement le Cr₂O₃.
Avantageusement, les particules en dispersion interne, à savoir les particules d'oxyde Cr₂O₃ et/ou de précurseur(s) occupent au moins 0,1 %, notamment au moins 0,5 %, en particulier au moins 1 % du volume de l'alliage. A titre indicatif, la proportion est en général d'au plus 10 %, en particulier au plus 5 % en volume. La proportion volumique de Cr₂O₃ est très avantageusement de l'ordre de 1 à 10 %, notamment de 1 à 5 %. De préférence la teneur en particules de Cr₂O₃ dispersée est de l'ordre de 2 à 3%.

Les particules d'oxyde de chrome internes sont avantageusement réparties dans la matrice sous forme d'une dispersion nanométrique à micrométrique, c'est-à-dire que les particules ont avantageusement une taille de l'ordre du nanomètre à une dizaine de microns notamment de 1 nm à 10 µm, en particulier de 0,1 à 5 µm.

Avantageusement, l'alliage doit son caractère Cr₂O₃-formeur à une matrice qui renferme du chrome à raison d'au moins 10 %en poids, notamment au moins 15 % en poids, en particulier au moins 20 % en poids de l'alliage.

Alors que les fortes teneurs en chrome ne sont en général pas recommandées dans la technique connue en raison de la vitesse d'oxydation paradoxalement élevée du chrome pur, la dispersion d'oxyde interne Cr₂O₃ dans les alliages selon l'invention a un effet avantageux également dans le cas des alliages riches en chrome, dont l'usure en milieu oxydant se révèle moins rapide.

Dans un mode de réalisation particulier de l'invention, la matrice de l'alliage est composée de chrome ou comprend du chrome en combinaison avec au moins un autre métal réfractaire tel que notamment le molybdène, le tungstène, le niobium ou le tantale.

La très bonne tenue à haute température de ces métaux réfractaires, qui ont tous un point de fusion supérieur à 1700°C, les rend avantageux pour la réalisation d'outils sollicités à très haute température, notamment jusqu'à 1300°C.

A cet égard, on peut préférer les matrices à base de molybdène et de chrome ; à base de molybdène, de chrome et de tungstène ; ou à base de tungstène et de chrome.

Le chrome, en tant qu'élément de base ou qu'élément d'alliage, procure au matériau la ductilité nécessaire en fonction des sollicitations en service de l'outil. Il intervient également comme réserve de chrome pour la formation de la couche de Cr₂O₃ superficielle.

De façon générale, les teneurs en les éléments constitutifs de l'alliage peuvent être choisies de façon connue en soi, en particulier en fonction des diagrammes de phase correspondants, notamment pour ajuster les propriétés mécaniques du matériau.

A titre d'illustration non limitative, on peut citer des matrices
- molybdène-chrome renfermant de 15 à 50 % en poids de chrome et de 50 à 85 % en poids de molybdène ;
- tungstène-chrome renfermant de 20 à 99 % en poids de chrome et de 1 à 80 % en poids de tungstène.

A titre de matrice préférée, on peut citer des matrices molybdène-tungstène-chrome renfermant :
de 10 à 60 % en poids de Cr,
   avantageusement de 20 à 40 % en poids de Cr
de 10 à 50 % en poids de Mo
   avantageusement de 10 à 50 % en poids de Mo
   notamment de 20 à 40 % en poids de Mo
de 10 à 70 % en poids de W
   avantageusement de 10 à 50 % en poids de W
   notamment de 20 à 40 % en poids de W

Dans des matrices particulièrement avantageuses, le rapport pondéral moybdène/tungstène est en faveur du tungstène, notamment de l'ordre de 0,3 à 0,6.

Les alliages des métaux réfractaires ci-dessus sont préparés de préférence par frittage, et à ce titre, peuvent comprendre en outre un agent de frittage tel que le palladium ou autre platinoïde, avantageusement à raison de 0,1 à 3 % en poids de l'alliage.

Il est en général préférable que la teneur en palladium ne soit pas trop élevée eu égard à la teneur en chrome, de façon à éviter l'apparition d'une phase intergranulaire de Pdα saturé en Cr en solution solide, qui par son bas point de fusion a tendance à abaisser les propriétés mécaniques de l'alliage à haute température.

Une gamme de compositions d'alliage réfractaire préférées est la suivante :

| | |
|---|---|
| Cr | 15 à 42% |
| W | 25 à 50 % |
| Mo | 12 à 35% |
| Pd | 0,5 à 1% |
| Impuretés résiduelles < 0,5 %. | |

Une composition d'alliage réfractaire préférée notamment est la suivante :

| | |
|---|---|
| Cr | 34 à 40% |
| W | 27 à 35 % |
| Mo | 27 à 35% |
| Pd | 0,5 à 1 % |
| impuretés résiduelles < 0,5 %. | |

Une autre composition d'alliage réfractaire préférée est notamment la suivante :

| | |
|---|---|
| Cr | 34 à 42 %, notamment 34 à 40% |
| W | 33 à 47% |
| Mo | 12 à 24% |
| Pd | 0,5 à 1% |
| Impuretés résiduelles < 0,5 %. | |

L'amélioration de la tenue à l'oxydation n'est toutefois pas limitée aux seuls alliages réfractaires mentionnés ci-dessus mais concerne aussi d'autres alliages comprenant du chrome. Ainsi, dans un autre mode de réalisation particulier de l'invention, la matrice est à base de fer, de nickel et/ou de cobalt, en combinaison avec du chrome. On peut citer notamment des matrices à base de nickel-chrome, cobalt-chrome, nickel-cobalt-chrome, nickel-fer-chrome, cobalt-fer-chrome, cobalt-nickel fer chrome, dans lesquelles la teneur en ces éléments est choisie de préférence dans les gammes suivantes (en % en poids) :

| | |
|---|---|
| Cr | 10 à 40% |
| Ni | 10 à 80% |
| Co | 10 à 80% |
| Fe | 0 à 40% |

On peut citer par exemple des matrices nickel-chrome avec environ 20 à 30 % en poids de Cr, fer-chrome avec environ 15 à 25 % en poids de Cr, ou cobalt-chrome avec environ 25 à 35 % en poids de Cr.

On peut également envisager des matrices de type ODS, notamment à base de nickel-chrome ou nickel-chrome-cobalt, renforcées par dispersion d'oxyde. L'oxyde en dispersion peut être choisi notamment parmi les oxydes d'yttrium, de zirconium, de lanthane, de cérium, de hafnium, de thorium et autres éléments susceptibles de former des oxydes stables, n'oxydant pas le ou les métaux de la matrice. Dans ce type d'alliage, avec la présence combinée de dispersoïdes d'oxyde de chrome et d'au moins un oxyde d'un élément actif ci-dessus, on peut procurer au matériau à la fois d'excellentes propriétés mécaniques à température élevée et une résistance améliorée à la corrosion et/ou l'oxydation.

Avec tous les alliages Cr₂O₃-formeurs étudiés, il semblerait que la dispersion interne d'oxyde de Cr₂O₃ conduise à un meilleur ancrage de la couche protectrice de Cr₂O₃ à la surface du matériau au contact de l'atmosphère oxydante ou corrosive. La stabilité « mécanique » de la couche d'oxyde ainsi obtenue est un facteur d'amélioration de la résistance à l'oxydation, en ce sens qu'elle réduit les risques de mise à nu du matériau par érosion.

En outre, même dans des conditions particulièrement sévères où le matériau subit des sollicitations mécaniques très fortes entraînant une défaillance locale de la couche d'oxyde par déchirure ou érosion, il a été observé que les alliages selon l'invention ont une remarquable faculté pour reconstituer rapidement la couche de Cr₂O₃ là où elle a été dégradée.

Il semblerait également que la présence d'oxyde de chrome interne favorise l'obtention d'une couche de Cr₂O₃ superficielle plus compacte et plus dense dans laquelle la diffusion des espèces réactives serait ralentie. Cela semble être le cas de l'oxygène dans la mesure où la vitesse d'oxydation des alliages à Cr₂O₃ interne selon l'invention est plus faible que celles d'alliages similaires ne comprenant pas de Cr₂O₃ interne. On observe également une amélioration du même type vis-à-vis de la nitruration.

De manière générale, on peut dire que la présence de particules d'oxyde de chrome Cr₂O₃ ou de ses précurseurs favorise l'entretien d'une protection efficace contre l'oxydation et autres types de corrosion.

L'invention a également pour objet un procédé d'élaboration d'un alliage comme décrit précédemment, caractérisé en ce qu'il comprend une ou plusieurs étapes de consolidation à chaud de poudres métalliques, notamment de frittage, de pressage, (par exemple un pressage uniaxial ou isostatique), de forgeage ou de corroyage à chaud (par exemple une extrusion ou un laminage). Ces différents types de consolidation peuvent être complémentaires.

S'agissant du frittage, on peut envisager un frittage libre ou bien sous charge utilisant les techniques de pressage uniaxial à chaud ou de pressage isostatique à chaud.

Les éléments constituant la matrice de l'alliage, individuellement sous forme de poudre, sont mélangés pour obtenir un matériau particulaire de composition homogène, dans une étape préliminaire de mélange des poudres métalliques du type broyage.

En fonction notamment de la granulométrie initiale des poudres, cette opération peut être réalisée avec des moyens de broyage traditionnels ou plus énergiques.

Dans certains cas, le procédé peut ainsi comprendre une étape préliminaire de mécanosynthèse (mechanical alloying en anglais). Cette technique de broyage de poudres, au moyen d'un matériau broyant généralement sous forme de billes, permet une réduction de la granulométrie des poudres, qui peut éventuellement s'accompagner d'une réaction chimique. Il peut s'agir notamment d'une synthèse d'alliage à partir de poudres métalliques élémentaires en formant des composés intermétalliques ou des solutions solides, ou encore de réactions d'oxydoréduction entre les poudres.

Cette technique est intéressante notamment pour réaliser la dispersion d'une phase fragile dans une matrice métallique ; c'est le cas de la fabrication des alliages ODS.

On dispose pour introduire les particules d'oxyde Cr₂O₃ dans le matériau, de plusieurs possibilités que l'on peut mettre en oeuvre de façon alternative ou en combinaison:
- ajouter au mélange de poudres métalliques, de l'oxyde de chrome sous forme divisée ;
- former les particules d'oxyde *in situ* à partir de chrome métallique sous forme divisée en exposant le chrome à une atmosphère oxydante. Dans ce cas, on réalise de préférence l'oxydation du chrome avant ou pendant le mélange des poudres métalliques ;
- ajouter au mélange de poudres métalliques un précurseur d'oxyde de chrome, notamment un composé oxygéné d'un métal réductible par le chrome, tel qu'un oxyde, sous forme divisé.

Avantageusement, l'étape de consolidation à chaud est conduite sous vide ou sous atmosphère inerte, pour éviter une pollution indésirable. En présence d'éléments à forte tension de vapeur comme le chrome, il est préférable d'opérer sous pression de gaz inerte notamment de l'ordre d'au moins 5.10⁻⁵ Pa, plutôt que sous vide, au moins pendant une partie du pressage. Comme gaz inerte, on peut utiliser par exemple de l'argon.

La température de consolidation dépend naturellement de la composition de la matrice de l'alliage, ainsi que de la charge éventuellement appliquée. Ces paramètres peuvent être choisis aisément de façon connue en soi par l'homme du métier.

Comme indiqué précédemment, les alliages selon l'invention permettent de fabriquer des articles utilisables en milieu oxydant ou corrosif à haute température. A cet égard, l'invention a encore pour objet un article, notamment pour l'élaboration et/ou la transformation à chaud du verre, réalisé en un alliage tel qu'il vient d'être décrit.

Entre autres applications, un tel article peut être notamment une assiette de fibrage pour la fabrication de laine de verre, un élément de filière pour la fabrication de fibre de verre textile, un creuset de fusion de matière vitrifiable, un organe d'agitation de verre fondu, un élément ou un support de sonde plongeant dans le verre fondu, une électrode de fusion...

De manière générale, l'alliage selon l'invention peut être utilisé pour fabriquer des filières en sortie de four ou de feeder pour la production de matériaux à partir d'une composition vitrifiable. Il peut s'agir, comme mentionné plus haut, de la production de fils de verre dits textile utilisés dans le renforcement, mais aussi de la production de fibres minérales de type fibres de verre ou fibres de roche utilisées usuellement pour l'isolation thermique ou acoustique.

Cela comprend également le verre d'emballage dit verre creux du type flacon, bouteille.

En dehors de l'industrie verrière, les alliages selon l'invention peuvent s'appliquer à la fabrication d'articles très divers, lorsque ceux-ci doivent présenter une résistance élevée en milieu oxydant et/ou corrosif, en particulier à haute température, par exemple pour réaliser des pièces de four de traitement thermique, des résistances électriques chauffantes ou bien dans l'aviation pour des éléments de turbine.

De manière générale, ces alliages peuvent servir à réaliser tout type de pièces en alliage réfractaire servant au fonctionnement ou à l'exploitation de four de traitement thermique à haute température (au-delà de 1100°C). Il peut ainsi s'agir par exemple de pales de ventilateur chaud, de support de cuisson, de matériel d'enfournement... Ils peuvent aussi servir à réaliser tout type de résistance chauffante destinée à fonctionner en atmosphère chaude oxydante, et à réaliser des éléments de turbine, entrant dans des moteurs de véhicule terrestre, maritime ou aérien ou dans tout autre application ne visant pas des véhicules, par exemple dans des centrales.

D'autres caractéristiques et avantages de l'invention ressortiront des exemples suivants qui illustrent l'invention de façon non limitative, ainsi que des dessins annexés sur lesquels :
- la **figure 1** représente la comparaison des propriétés en oxydation isotherme d'un premier alliage selon l'invention et d'un alliage comparatif ne renfermant pas d'oxyde de chrome en dispersion interne ;
- la **figure 2** représente la comparaison des propriétés en oxydation isotherme d'un second alliage selon l'invention et d'un alliage comparatif ne renfermant pas d'oxyde de chrome en dispersion interne ;
- la **figure 3** représente les propriétés en oxydation isotherme de quatre autres alliages selon l'invention ;
- la **figure 4** représente la comparaison des propriétés en oxydation isotherme de trois autres alliages selon l'invention et d'un alliage comparatif ne renfermant pas d'oxyde de chrome en dispersion interne.

### Exemple 1

On prépare un alliage à base de chrome-molybdène-tungstène selon l'invention en modifiant une matrice Cr - Mo - W de la composition suivante (en % en poids) :

| | |
|---|---|
| Cr | 24% |
| Mo | 37,5% |
| W | 37,5% |
| Pd | 1% |

par l'ajout de particules de Cr₂O₃ à raison de 5 % en volume environ.

La composition pondérale de l'alliage est la suivante (en % en poids) :

| | |
|---|---|
| Cr | 23,4 % |
| Mo | 36,6% |
| W | 36,6% |
| Pd | 1,0 % |
| Cr₂O₃ | 2,4 % |

Le molybdène sous forme de poudre de granulométrie 2-4 µm, et le tungstène en poudre de granulométrie 1-2 µm, sont tout d'abord soumis à un recuit sous hydrogène pendant 1 heure à 900°C pour réduire l'oxyde à la surface des grains métalliques. Ils sont ensuite mélangés au chrome en poudre de granulométrie 1 µm, au palladium de granulométrie 1-1,5 µm et à l'oxyde de chrome finement divisé, et broyés longuement dans un mortier en agate pour obtenir un mélange de composition homogène avec une répartition fine et uniforme des particules de Cr₂O₃.

On procède enfin au frittage sous charge des poudres par pressage uniaxial à chaud dans un four presse de marque LILLIPUT de la Société ECM, comprenant un élément chauffant en graphite, un groupe hydraulique qui permet par l'intermédiaire d'un piston d'imposer une charge maximale de 10 000 DaN au centre du four, ainsi qu'une station de vide primaire et une station d'alimentation en gaz neutre (argon).

Le mélange de poudres est d'abord compacté en une pastille de 15 mm de diamètre dans la matrice en graphite, en comprimant la poudre à température ambiante sous une charge d'environ 100 kg.

Ensuite a lieu le frittage proprement dit dans les conditions suivantes :
- montée en température à faible vitesse (10 à 15°C/min) et par paliers jusqu'à 1200°C sous vide primaire dynamique et sous charge de 5 MPa ;
- puis mise en place d'un balayage d'argon et poursuite de la montée en température à faible vitesse, avec un palier long (60 min environ) à 1370°C sous charge de 27 MPa et un autre palier long (120 min environ) à 1420°C toujours sous 27 MPa de charge ;
- saut de température de 1420°C à la température ambiante sous charge nulle et balayage d'argon.

Après le frittage, on peut procéder à un recuit d'une part pour diminuer les contraintes résiduelles qui ont pu apparaître au cours du refroidissement et d'autre part pour améliorer, si besoin est, l'homogénéité de l'alliage. Des conditions avantageuses de recuit sont les suivantes ;
- montée en température jusqu'à 1370°C, puis palier de 2 h à 1370°C sous balayage d'hydrogène ;
- puis montée jusqu'à 1420°C et palier de 24 h à 1420°C sous balayage d'argon ;
- refroidissement à la température ambiante.

L'alliage obtenu est observé en microscopie optique, microscopie électronique à balayage (MEB) et microanalyse à la sonde de Castaing, suivant les techniques habituelles.

Le résultat de la synthèse est un alliage homogène avec une taille de grains de l'ordre de 50 µm, les grains de Cr₂O₃ de quelques microns de large étant répartis uniformément aux joints de grains de l'alliage. On vérifie que le volume occupé par les grains de Cr₂O₃ représente environ 5 % du volume de l'alliage.

Les propriétés en oxydation à haute température de l'alliage sont évaluées par thermogravimétrie où l'on mesure la prise de masse d'un échantillon d'alliage (indicatrice de la quantité d'oxyde formée) en fonction du temps dans une enceinte chauffée à 1300°C. Les conditions générales sont les suivantes :
- montée en palier isotherme à 10°C/min ;
- durée du palier isotherme de 100 heures à 1300°C ;
- descente à la température ambiante à 10°C/min ;
avec un balayage du four par un débit d'air synthétique sec de 1,5 l/h.

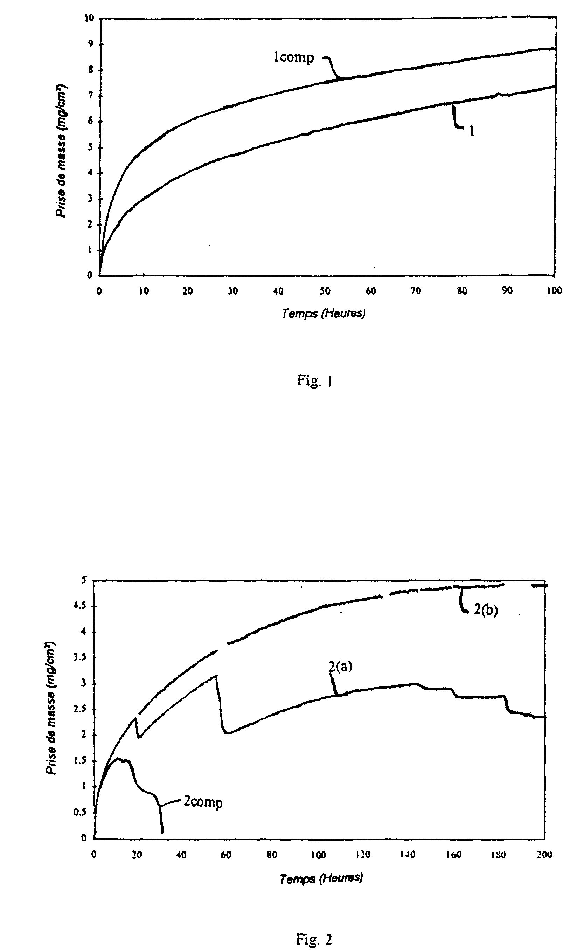

Les résultats sont représentés sur le graphe de la figure 1 en termes de prise de masse (en mg/cm²) par unité de temps (en heures).

### Exemple comparatif 1

Un alliage ayant la même matrice que celui de l'exemple 1 a été préparé sans ajouter d'oxyde de chrome aux poudres de métaux élémentaires.

Sa composition pondérale est donc la suivante :

| | |
|---|---|
| Cr | 24% |
| Mo | 37,5% |
| W | 37,5% |
| Pd | 1 % |

Les conditions de préparation sont les mêmes qu'à l'exemple 1, et ses propriétés en oxydation sont également représentées sur la figure 1.

La figure 1 montre que la prise de masse de l'alliage de l'exemple 1 (courbe 1) est plus faible que celle de l'alliage comparatif sans ajout de Cr₂O₃ (courbe 1 comp.), et donc que l'ajout de Cr₂O₃ interne améliore la résistance à l'oxydation.

### Exemple 2

De façon analogue à l'exemple 1, on prépare un alliage à base de chrome-mobybdène-tungstène selon l'invention ayant une plus forte teneur en chrome. Sa composition pondérale est la suivante :

| | |
|---|---|
| Cr | 37,9% |
| Mo | 29,2 % |
| W | 29,2% |
| Pd | 1,0% |
| Cr₂O₃ | 2,7% |

Les conditions de préparation sont les mêmes qu'à l'exemple 1. Elles peuvent comprendre de façon facultative une étape préliminaire de mécanosynthèse : après recuit sous hydrogène du molybdène et du tungstène, les poudres métalliques sont introduites dans une jarre contenant des billes en acier trempé, sous atmosphère d'argon desséché. La jarre fermée hermétiquement est ensuite montée sur un broyeur planétaire et les poudres sont broyées en 3 séquences d'une heure espacées d'un quart d'heure afin d'éviter un échauffement trop important.

Le résultat de la synthèse est un alliage dont la taille de grains est de l'ordre de 15 à 20 µm, avec des grains d'oxyde de chrome dispersés uniformément au niveau des joints de grains et occupant environ 5 % du volume de l'alliage.

Comme à l'exemple 1, cet alliage est caractérisé par thermogravimétrie à 1300°C. Le thermogramme (courbe 2a) représenté sur la figure 2 montre que la cinétique d'oxydation est perturbée par des séquences de pertes de masse rapide, suivies d'une reprise de régime cinétique normal dans un délai relativement bref (si on fait abstraction de ces décrochements -courbe 2 b - le régime cinétique est du même type qu'à l'exemple 1).

Les pertes de masse rapides semblent dues à des ruptures locales de la couche d'oxyde principalement au niveau des arêtes de la plaquette oxydée. Les reprises de régime normal suggèrent que l'alliage a la faculté d'auto-cicatricer sa couche superficielle d'oxyde de chrome lors de défaillances de celles-ci.

L'alliage de l'exemple 2 est de fait très résistant, car il résiste à l'oxydation à 1300°C pendant 325 h.

### Exemple comparatif 2

Un alliage ayant la même matrice que celui de l'exemple 2 a été préparé sans ajouter d'oxyde de chrome aux poudres de métaux élémentaires.

Sa composition pondérale est la suivante :

| | |
|---|---|
| Cr | 39% |
| Mo | 30% |
| W | 30 % |
| Pd | 1% |

Les propriétés en oxydation de cet alliage comparatif sont également représentées sous la forme d'un thermogramme (courbe 2 comp.) sur la figure 2. L'alliage comparatif 2 a comportement à l'oxydation très différent de l'alliage 2 : il commence par s'oxyder avec une prise de masse modérée représentative d'une formation limitée de la couche superficielle de Cr₂O₃ protectrice, puis la prise de masse chute brutalement, indiquant une rupture irrémédiable de cette couche superficielle et une dégradation totale du matériau.

Il semblerait en particulier que la couche superficielle d'oxyde de l'alliage comparatif soit très fortement contrainte et de ce fait se fissure en n'étant plus étanche à l'azote. La nitruration du chrome mis à nu accélérerait la corrosion de l'alliage qui devient rapidement complète.

La présence de particules d'oxyde de chrome en dispersion interne dans l'alliage 2 permet de remédier à cette insuffisance et permet au matériau de résister à l'oxydation par formation superficielle d'une couche de Cr₂O₃ protectrice et durable.

### Exemples 3 à 6

Ces exemples concernent encore des alliages à base de chrome-molybdène-tungstène, dans lesquels le rapport molybdène/tungstène est cette fois en faveur du tungstène.

Les conditions de synthèse sont analogues à celles de l'exemple 1, hormis que l'étape finale de recuit est :
- supprimée pour les exemples 3 et 5 ;
- effectuée dans les exemples 4 et 6 à une température de palier de 1600°C pendant 24 h.
Les caractéristiques essentielles de ces alliages sont indiquées dans le tableau suivant.

| | COMPOSITION(% en poids) | Mo/W | Recuit |
|---|---|---|---|
| EX. 3 | Cr 38,5% | | |
| | Mo 19,8% | | |
| | W 39,5% | | |
| | Pd 1% | 0.5 | Non |
| | Cr₂O₃ 1,2% [2.5% en volume] | | |
| EX. 4 | Cr_{38,5} Mo_{19,8}W_{39,5}Pd₁ (Cr₂O₃)_{1,2} | 0.5 | 24 h à 1600°C |
| EX. 5 | Cr 38,5% | | |
| | Mo 14,2% | | |
| | W 44,4% | | |
| | Pd 1% | 0.33 | Non |
| | Cr₂O₃ 1,2% [2.5% en volume] | | |
| EX. 6 | Cr_{38.5} Mo_{14,2} W_{44,4}Pd₁ (Cr₂O₃)_{1,2} | 0.33 | 24 h à 1600°C |

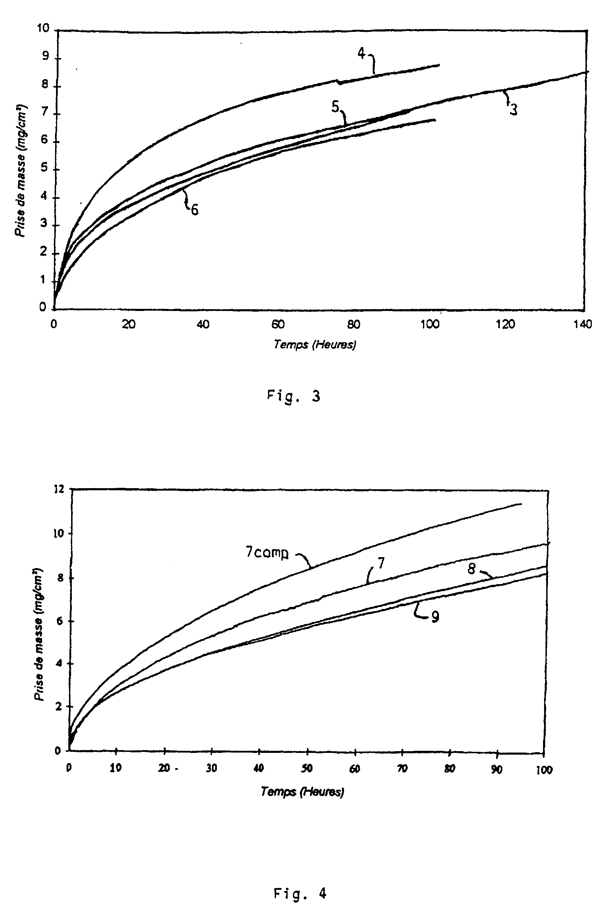

Les résultats des essais de thermogravimétrie présentés sur la figure 3 (les courbes 3, 4, 5 et 6 sont les thermogrammes des alliages des exemples 3, 4, 5 et 6 respectivement) montrent que ces quatre alliages résistent parfaitement à une oxydation d'au moins 100 heures à 1300°C, pouvant aisément dépasser 150 heures.

### Exemple 7

On prépare un alliage à base de nickel-chrome selon l'invention en modifiant une matrice Ni-Cr de la composition suivante (en % en poids) :

| | |
|---|---|
| Ni | 70% |
| Cr | 30% |

par l'ajout de particules de Cr₂O₃ à raison de 5 % en volume environ.

La composition pondérale de l'alliage est la suivante (en % en poids) :

| | |
|---|---|
| Ni | 67,8 % |
| Cr | 29,0% |
| Cr₂O₃ | 3,2% |

Les métaux sous forme de poudre sont mélangés avec l'oxyde de chrome finement divisé, et broyés longuement dans un mortier en agate pour obtenir un mélange de composition homogène avec une répartition fine et uniforme des particules de Cr₂O₃.

On procède ensuite au frittage sous charge des poudres par pressage uniaxial à chaud dans le four presse de l'exemple 1 d'une pastille de 15 mm de diamètre de poudre comprimée à température ambiante sous une charge d'environ 100 kg.

Le frittage proprement dit est effectué avec un palier long (60 min environ) à 1000°C sous charge de 27 MPa et un autre palier long (120 min environ) à 1100°C toujours sous 27 MPa de charge.

Comme dans les exemples précédents, on vérifie par microscopie que l'alliage obtenu est homogène et que les grains de Cr₂O₃ de quelques microns de large sont répartis uniformément aux joints de grains de l'alliage. On vérifie que le volume occupé par les grains de Cr₂O₃ représente environ 5 % du volume de l'alliage.

Les propriétés en oxydation à haute température de l'alliage sont évaluées par thermogravimétrie à 1300 °C dans les conditions énoncées plus haut, pendant une centaine d'heures, et représentées graphiquement par le thermogramme 7 de la figure 4.

La constante Kₚ de la cinétique d'oxydation parabolique est de l'ordre de 2,6.10⁻¹⁰ g².cm⁻⁴.s⁻¹.

Une observation du matériau oxydé par microscopie électronique à balayage en mode à électrons rétrodiffusés montre la présence d'une couche superficielle d'oxyde de chrome adhérente à l'alliage très régulière et parfaitement compacte d'une épaisseur de 50 µm environ.

Les propriétés de cet alliage en présence d'un milieu corrosif constitué par du verre fondu sont caractérisées dans un essai électrochimique consistant à mesurer le potentiel de passivation de l'alliage plongé dans un bain de verre fondu à la température de 950°C. Les mesures sont réalisées grâce à un montage à 3 électrodes : une électrode de travail en l'alliage 7, une contre-électrode en platine et une électrode de référence en zircone. L'électrode de travail est une électrode tournante permettant d'améliorer le renouvellement de verre autour de l'électrode et de simuler l'érosion exercée sur le matériau en service.

Dans les conditions de l'essai, la courbe intensité-potentiel de l'alliage 7 présente un pic de passivation pour un potentiel de l'ordre de -1,1 mV avec une intensité de courant de passivation d'environ 5,0 mA/cm². L'intensité du pic de passivation est indicatrice de l'inverse de la capacité de l'alliage à former et à entretenir sa couche protectrice de Cr₂O₃ superficielle.

### Exemple comparatif 7

On prépare dans les conditions de l'exemple 7 un alliage comparatif 7, qui ne comporte pas d'oxyde de chrome en dispersion interne. Sa composition est celle de la matrice utilisée ci-dessus, à savoir :

| | |
|---|---|
| Ni | 70% |
| Cr | 30% |

Cet alliage est soumis au même test de thermogravimétrie à 1300°C et ses performances sont illustrées par le thermogramme 7 sur la figure 4.

La prise de masse de l'alliage comparatif 7 est bien plus importante que celles de l'alliage 7, indiquant une moins bonne résistance à l'oxydation. La constante Kₚ de la cinétique d'oxydation parabolique de l'alliage comparatif 7 est de l'ordre de 3,9.10⁻¹⁰ g².cm⁻⁴.s⁻¹.

L'observation du matériau oxydé par microscopie électronique à balayage montre des différences de structure de la couche de Cr₂O₃ superficielle par rapport à celle observée sur l'alliage 7, la couche étant moins compacte et présentant de nombreuses fissures.

Les propriétés de cet alliage en présence d'un milieu corrosif constitué par du verre fondu sont caractérisées par les mesures électrochimiques décrites dans l'exemple 7.

Dans les mêmes conditions d'essai, la courbe intensité-potentiel de l'alliage comparatif 7 présente un pic de passivation pour le même potentiel de l'ordre de - 1,1 mV avec une intensité de courant de passivation d'environ 6,3 mA/cm². L'intensité du pic de passivation est indicatrice de l'inverse de la capacité de l'alliage à former et à entretenir sa couche protectrice de Cr₂O₃ superficielle.

La comparaison des résultats montre que la présence de Cr₂O₃ interne dans l'alliage 7 abaisse de façon remarquable l'intensité du pic de passivation de l'alliage, de sorte que sa passivation dans le verre est facilitée par rapport à l'alliage comparatif 7. C'est au moins en partie grâce à cette facilité de passivation que l'alliage 7 est capable de réparer les fissures (et éventuellement les déchirures) qui se créent dans la couche superficielle de passivation et ainsi d'entretenir à sa surface une couche d'oxyde plus compacte et plus étanche aux espèces réactives.

### Exemple 8

On prépare comme à l'exemple 7 un autre alliage à base de nickel-chrome selon l'invention en modifiant la même matrice Ni-Cr par l'ajout de particules de Cr₂O₃ à raison de 1 % en volume environ.

La composition pondérale de l'alliage est la suivante (en % en poids) :

| | |
|---|---|
| Ni | 69,5% |
| Cr | 29,8 % |
| Cr₂O₃ | 0,6% |

Les propriétés en oxydation de l'alliage 8 sont évaluées par thermogravimétrie à 1300 °C dans les mêmes conditions et représentées graphiquement par le thermogramme 8 de la figure 4.

La comparaison des thermogrammes 7 et 8 montre que l'alliage 8 présente une résistance à l'oxydation supérieure à celle de l'alliage 7, la constante Kₚ de la cinétique d'oxydation parabolique de l'alliage 8 étant de l'ordre de 2,0.10⁻¹⁰ g².cm⁻⁴.s⁻¹.

### Exemple 9

On prépare comme à l'exemple 7 un autre alliage à base de nickel-chrome selon l'invention en modifiant la même matrice Ni-Cr par l'ajout de particules de Cr₂O₃ à raison de 2,5 % en volume environ.

La composition pondérale de l'alliage est la suivante (en % en poids) :

| | |
|---|---|
| Ni | 68,9% |
| Cr | 29,5% |
| Cr₂O₃ | 1,6% |

Les propriétés en oxydation de l'alliage 9 sont évaluées par thermogravimétrie à 1300 °C dans les mêmes conditions et représentées graphiquement par le thermogramme 9 de la figure 4.

La comparaison des thermogrammes 7, 8 et 9 montre que l'alliage 9 présente une résistance à l'oxydation supérieure à celle des alliages 7 et 8, témoignant d'un optimum pour la concentration en Cr₂O₃ interne autour de 2,5% en volume. La constante Kₚ de la cinétique d'oxydation parabolique de l'alliage 9 est de l'ordre de 1,8.10⁻¹⁰ g².cm⁻⁴.s⁻¹.

Une observation du matériau oxydé par microscopie électronique à balayage en mode à électrons rétrodiffusés donne des résultats similaires à ceux de l'exemple 7 avec toutefois une meilleure adhérence de la couche d'oxyde à l'alliage.

## Revendications

1. Alliage réfractaire comprenant du chrome métal, apte à former à sa surface une couche d'oxyde de chrome, résistant à l'oxydation et/ou à la corrosion notamment par le verre, en particulier à haute température, **caractérisé en ce qu'**il renferme en dispersion au sein de sa matrice, de l'oxyde de chrome Cr₂O₃ et/ou au moins un précurseur de cet oxyde, ledit précurseur étant capable de réagir dans le milieu de ladite matrice pour former de l'oxyde de chrome Cr₂O₃ en cas d'oxydation.

2. Alliage selon la revendication 1, **caractérisé en ce que** les particules en dispersion occupent de 0,1 à 10 % du volume de l'alliage, notamment de 1 à 5 %.

3. Alliage selon l'une quelconque des revendications précédentes, **caractérisé en ce qu'a**u moins un précurseur d'oxyde de chrome est un composé oxygéné d'un métal réductible par le chrome.

4. Alliage selon l'une quelconque des revendications précédentes, **caractérisé en ce que** les particules d'oxyde de chrome ont une taille de l'ordre de 1 nm à 10 µm.

5. Alliage selon l'une quelconque des revendications précédentes, **caractérisé en ce que** la matrice de l'alliage est une matrice de chrome ou comprenant du chrome en combinaison avec au moins un autre métal réfractaire tel que notamment le molybdène, le tungstène, le niobium ou le tantale, choisie notamment parmi une matrice à base de molybdène-chrome, de molybdène-chrome-tungstène, et de tungstène-chrome.

6. Alliage selon la revendication 5, **caractérisé en ce que** la matrice comprend (en % en poids) :
de 10 à 60 % de Cr
de 10 à 50 % de W
de 10 à 70 % de Mo

7. Alliage selon la revendication 5 ou 6, **caractérisé en ce qu'**il comprend en outre un agent de frittage tel que le palladium ou autre platinoïde, à raison notamment de 0,1 à 3 % en poids.

8. Alliage selon l'une quelconque des revendications 1 à 4, **caractérisé en ce que** la matrice est une matrice à base de fer, de nickel et/ou de cobalt en combinaison avec du chrome.

9. Alliage selon la revendication 8, **caractérisé en ce que** la matrice est choisie parmi des matrices à base de nickel-chrome, cobalt-chrome, nickel-cobalt-chrome, nickel-fer-chrome, cobalt-fer-chrome, cobalt-nickel-fer-chrome, et **en ce que** la teneur en ces éléments est choisie dans les gammes suivantes (en % en poids) :
| | |
|---|---|
| Cr | 10 à 40 % |
| Ni | 10 à 80 % |
| Co | 10 à 80% |
| Fe | 0 à 40 % |

10. Alliage selon l'une quelconque des revendications précédentes, **caractérisé en ce qu'**il comprend en outre en dispersion au sein de sa matrice au moins un oxyde choisi parmi les oxydes d'yttrium, de lanthane, de cérium, de zirconium, de hafnium et de thorium.

11. Procédé d'élaboration d'un alliage selon l'une quelconque des revendications précédentes, **caractérisé en ce qu'**il comprend une ou plusieurs étapes de consolidation à chaud de poudres métalliques, notamment de frittage, de pressage, de forgeage ou de corroyage.

12. Procédé selon la revendication 11, **caractérisé en ce qu'**il comprend une étape préliminaire de mélange des poudres métalliques, notamment par broyage, par exemple par mécanosynthèse.

13. Procédé selon la revendication 11 ou 12, **caractérisé en ce que** l'on introduit dans les poudres métalliques de l'oxyde de chrome Cr₂O₃ sous forme divisée.

14. Procédé selon l'une quelconque des revendications 11 à 13, **caractérisé en ce que** l'on forme les particules d'oxyde de chrome Cr₂O₃ in situ à partir de chrome métallique, en exposant le chrome à une atmosphère oxydante.

15. Procédé selon l'une quelconque des revendications 11 à 14, **caractérisé en ce que** l'on introduit dans les poudres métalliques au moins un précurseur d'oxyde de chrome Cr₂O₃ sous forme divisée.

16. Article, notamment article utilisable pour l'élaboration et/ou la transformation à chaud du verre, réalisé en un alliage selon l'une quelconque des revendications 1 à 10.

## Patentansprüche

1. Feuerfeste Legierung, die metallisches Chrom umfasst und in der Lage ist, auf ihrer Oberfläche eine Chromoxidschicht zu bilden, die gegen speziell von Glasschmelze verursachte Oxidation und/oder Korrosion, insbesondere bei hohen Temperaturen, beständig ist, **dadurch gekennzeichnet, dass** sie in der Matrix Chromoxid, Cr₂O₃, und/oder mindestens einen Vorläufer dieses Oxids dispergiert enthält, der im Medium dieser Matrix reagieren kann, um bei einem Oxidationsvorgang Chromoxid, Cr₂O₃, zu bilden.

2. Legierung nach Anspruch 1, **dadurch gekennzeichnet, dass** die dispergierten Teilchen 0,1 bis 10 Vol.-% und insbesondere 1 bis 5 Vol.-% der Legierung ausmachen.

3. Legierung nach einem der vorhergehenden Ansprüche, **dadurch gekennzeichnet, dass** mindestens ein Vorläufer des Chromoxids eine sauerstoffhaltige Verbindung eines durch Chrom reduzierbaren Metalls ist.

4. Legierung nach einem der vorhergehenden Ansprüche, **dadurch gekennzeichnet, dass** die Größe der Chromoxidteilchen etwa 1 nm bis 10 µm beträgt.

5. Legierung nach einem der vorhergehenden Ansprüche, **dadurch gekennzeichnet, dass** die Legierungsmatrix aus Chrom besteht oder Chrom in Kombination mit mindestens einem weiteren feuerfesten Metall wie speziell Molybdän, Wolfram, Niob oder Tantal enthält und insbesondere aus einer Matrix auf der Basis von Molybdän-Chrom, Molybdän-Chrom-Wolfram und Wolfram-Chrom ausgewählt ist.

6. Legierung nach Anspruch 5, **dadurch gekennzeichnet, dass** die Matrix (in Gew.-%)
10 bis 60 % Cr,
10 bis 50 % W und
10 bis 70 % Mo
umfasst.

7. Legierung nach Anspruch 5 oder 6, **dadurch gekennzeichnet, dass** sie außerdem ein Sintermittel wie Palladium oder ein anderes Metall der Platingruppe mit einem Anteil von insbesondere 0,1 bis 3 Gew.-% enthält.

8. Legierung nach einem der Ansprüche 1 bis 4, **dadurch gekennzeichnet, dass** die Matrix eine Matrix auf der Basis von Eisen, Nickel und/oder Cobalt in Kombination mit Chrom ist.

9. Legierung nach Anspruch 8, **dadurch gekennzeichnet, dass** die Matrix aus Matrizen auf der Basis von Nickel-Chrom, Cobalt-Chrom, Nickel-Cobalt-Chrom, Nickel-Eisen-Chrom, Cobalt-Eisen-Chrom und Cobalt-Nickel-Eisen-Chrom ausgewählt ist **und dass** der Gehalt an diesen Elementen aus folgenden Bereichen (in Gew.-%) ausgewählt ist:
Cr 10 bis 40 %,
Ni 10 bis 80 %,
Co 10 bis 80 %,
Fe 0 bis 40 %.

10. Legierung nach einem der vorhergehenden Ansprüche, **dadurch gekennzeichnet, dass** sie außerdem in der Matrix mindestens ein Oxid dispergiert enthält, das aus den Oxiden von Yttrium, Lanthan, Cer, Zirconium, Hafnium und Thorium ausgewählt ist.

11. Verfahren zur Herstellung einer Legierung nach einem der vorhergehenden Ansprüche, **dadurch gekennzeichnet, dass** es eine oder mehrere Stufen zur Verfestigung von Metallpulver in der Hitze, insbesondere des Sinterns, Pressens, Schmiedens oder Knetens, umfasst.

12. Verfahren nach Anspruch 11, **dadurch gekennzeichnet, dass** es eine vorhergehende Stufe des Vermischens der Metallpulver, insbesondere durch Vermahlen, beispielsweise durch mechanisches Legieren, umfasst.

13. Verfahren nach Anspruch 11 oder 12, **dadurch gekennzeichnet, dass** zu dem Metallpulver Chromoxid, Cr₂O₃, in zerteilter Form gegeben wird.

14. Verfahren nach einem der Ansprüche 11 bis 13, **dadurch gekennzeichnet, dass** die Teilchen aus Chromoxid, Cr₂O₃, *in situ* aus metallischem Chrom gebildet werden, indem das Chrom einer oxidierenden Atmosphäre ausgesetzt wird.

15. Verfahren nach einem der Ansprüche 11 bis 14, **dadurch gekennzeichnet, dass** zu dem Metallpulver mindestens ein Vorläufer des Chromoxids, Cr₂O₃, in zerteilter Form gegeben wird.

16. Erzeugnis, insbesondere ein Erzeugnis, das zur Erzeugung und/oder Bearbeitung von Glas in der Hitze verwendbar ist, und welches aus einer Legierung nach einem der Ansprüche 1 bis 10 hergestellt ist.

## Claims

1. Refractory alloy comprising metal chromium capable of forming on its surface a layer of chromium oxide, resistant to oxidation and/or to corrosion in particular due to glass, particularly at high temperature, **characterised in that** it contains in dispersion within its matrix chromium oxide Cr₂O₃ and/or at least one precursor of this oxide, the said precursor being capable of reacting in the medium of the said matrix in order to form chromium oxide Cr₂O₃ in the case of oxidation.

2. Alloy as claimed in Claim 1, **characterised in that** the particles in dispersion take up 0.1 to 10 % of the volume of the alloy, in particular from 1 to 5 %.

3. Alloy as claimed in any one of the preceding claims, **characterised in that** at least one precursor of chromium oxide is an oxygenated compound of a metal reducible by chromium.

4. Alloy as claimed in any one of the preceding claims, **characterised in that** the particles of chromium oxide have a size of the order of 1 nm to 10 µm.

5. Alloy as claimed in any one of the preceding claims, **characterised in that** the matrix of the alloy is a matrix of chromium or comprising chromium in combination with at least one other refractory metal such as in particular molybdenum, tungsten, niobium or tantalum, chosen in particular from amongst matrices based on molybdenum-chromium, molybdenum-chromium-tungsten and tungsten-chromium.

6. Alloy as claimed in Claim 5, **characterised in that** the matrix comprises (in % by weight):
from 10 to 60 % of Cr
from 10 to 50 % of W
from 10 to 70% of Mo.

7. Alloy as claimed in Claim 5 or 6, **characterised in that** it also comprises a sintering agent such as palladium or another platinoid in a quantity in particular of 0.1 to 3 % by weight.

8. Alloy as claimed in any one of Claims 1 to 4, **characterised in that** the matrix is a matrix based on iron, nickel and/or cobalt in combination with chromium.

9. Alloy as claimed in Claim 8, **characterised in that** the matrix is chosen from among matrices based on nickel-chromium, cobalt-chromium, nickel-cobalt-chromium, nickel-iron-chromium, cobalt-iron-chromium, cobalt-nickel-iron-chromium, and **in that** the content of these elements is chosen within the following ranges (in % by weight):
Cr 10 to 40 %
Ni 10 to 80 %
Co 10 to 80 %
Fe 0 to 40 %.

10. Alloy as claimed in any one of the preceding claims, **characterised in that** it also contains in dispersion within its matrix at least one oxide chosen from among the oxides of yttrium, lanthanum, cerium, zirconium, hafnium and thorium.

11. Method of producing an alloy as claimed in any one of the preceding claims, **characterised in that** it comprises one or more steps of heat strengthening of metal powders, in particular sintering, pressing, forging or welding.

12. Method as claimed in Claim 11, **characterised in that** it comprises a preliminary step of mixing the metal powders, in particular by grinding, for example by mechanosynthesis.

13. Method as claimed in Claim 11 or 12, **characterised in that** chromium oxide Cr₂O₃ in divided form is introduced into the metal powders.

14. Method as claimed in any one of Claims 11 to 13, **characterised in that** the particles of chromium oxide Cr₂O₃ are formed in situ from metal chromium by exposing the chromium to an oxidising atmosphere.

15. Method as claimed in any one of Claims 11 to 14, **characterised in that** at least one precursor of chromium oxide Cr₂O₃ in divided form is introduced into the metal powders.

16. Article, in particular an article which can be used for the production and/or the heat transformation of glass, made from an alloy as claimed in any one of Claims 1 to 10.
